# EUROPEAN PATENT APPLICATION

(11) **EP 3 421 276 A1**
(43) Date of publication of application: **02.01.2019**
(21) Application number: 18161765.5
(22) Date of filing: 14.03.2018
(51) Int. Cl.: B60G 17/00, F16F 9/50, B62K 25/00

(54) **ELECTRONIC VARIABLE SUSPENSION SYSTEM**

(30) Priority: 29.06.2017 TW 106121689
(71) Applicant: Motive Power Industry Co., Ltd., Dacun Township, Changhua County 515 (TW)
(72) Inventor: CHENG, Kai-Wen, 515 Dacun Township, Changhua County, 515 (TW)
(74) Representative: Perani & Partners S.p.A.

(57) **Abstract**

An electronic variable suspension system applicable to a motorcycle includes a plurality of sensors, a suspension unit, an actuation unit, and a control unit. The sensors are disposed in a front portion and/or rear portion of the motorcycle to sense acceleration, displacement, or frequency so as to generate a plurality of sensing signals. The suspension unit includes front and rear suspension devices disposed in the motorcycle. The actuation unit includes front and rear actuation devices coupled to the front suspension device and the rear suspension device, respectively. The control unit generates at least a control signal according to the sensing signals. The actuation unit changes a damping value and/or a preload value of the front suspension device and/or the rear suspension device according to the at least a control signal.

## Description

### FIELD OF THE INVENTION

The present disclosure relates to suspension systems and, more particularly, to an electronic variable suspension system applicable to motorcycles.

### BACKGROUND OF THE INVENTION

Scooters, a type of motorcycles in wide use by people in many countries, have advantages, such as ease of use, avoiding traffic jams, and low prices. However, from the perspective of performance, scooters are outperformed by motorcycles equipped with transmission gears in terms of stability when moving on bumpy roads, accelerating, decelerating, and turning, because of their suspension systems. In general, an engine and a gearbox of a conventional scooter are connected. The rear wheel, gearbox, and engine of the conventional scooter will jerk up and down together, if the conventional scooter comes across bumpy roads, elevations, craters, pits, or protrusions while moving. The jolts overburden the rear damper of the conventional scooter. The greater the unsprung weight is, the worse the damper's performance is. The conventional scooters have poorer rear suspension systems and thus lower performance than that of motorcycles equipped with transmission gears.

Therefore, there is still room for improvement of conventional suspension systems of scooters with a view to enhance the performance thereof.

### SUMMARY OF THE INVENTION

An objective of the present disclosure is to provide an electronic variable suspension system capable of adjusting parameters thereof to meet driving needs, thereby enhancing motorcycle performance.

In order to achieve at least the above objective, the present disclosure provides an electronic variable suspension system applicable to a motorcycle. The electronic variable suspension system comprises a plurality of sensors, a suspension unit, an actuation unit, and a control unit. The sensors are disposed in the front portion and/or rear portion of the motorcycle to sense acceleration, displacement, or frequency so as to generate a plurality of sensing signals. The suspension unit comprises a front suspension device and a rear suspension device disposed in the motorcycle. The actuation unit comprises a front actuation device and a rear actuation device which are coupled to the front suspension device and the rear suspension device, respectively. The control unit is electrically coupled to the sensors and the actuation unit to generate at least a control signal according to the sensing signals. The actuation unit changes a damping value and/or a preload value of the front suspension device and/or the rear suspension device according to the at least a control signal.

In an embodiment, the control unit outputs at least a first control signal to the rear actuation device. After the rear actuation device changes the damping value and the preload value of the rear suspension device according to the at least a first control signal, the control unit outputs at least a second control signal to the front actuation device according to the sensing signals, so as to change the damping value and/or the preload value of the front suspension device.

In an embodiment, after receiving a mode selection signal, the control unit generates at least a control signal according to the received mode selection signal and then sends the at least a control signal to the actuation unit, so as to change the damping value and/or the preload value of the front suspension device and/or the rear suspension device.

In some embodiments, the mode selection signal is a signal indicating a selection of any one of modes as follows: a sports mode, a comfort mode, a smart mode, an on-road mode and an off-road mode.

In an embodiment, the sensors include a first sensor disposed in an upper location of the front portion of the motorcycle, and the control unit outputs at least a control signal to the front actuation device upon determination that a value of the sensing signal generated from the first sensor exceeds a threshold, so as to change at least one of the damping value and the preload value of the front suspension device, until the value of the sensing signal generated from the first sensor is less than or equal to the threshold.

In an embodiment, the sensors include a first sensor and a second sensor which are disposed in an upper location of the front portion and in a lower location of the front portion of the motorcycle, respectively, and the control unit outputs at least a control signal to the front actuation device upon determination that a ratio of values of the sensing signals generated from the first sensor and the second sensor exceeds a ratio threshold, so as to change at least one of the damping value and the preload value of the front suspension device, until the ratio of values of the sensing signals generated from the first sensor and the second sensor is less than or equal to the ratio threshold.

In an embodiment, the sensors include a third sensor and a fourth sensor which are disposed in an upper location of the rear portion and in a lower location of the rear portion of the motorcycle, respectively, to sense acceleration, displacement, or frequency.

In an embodiment, the sensors include a third sensor disposed in an upper location of the rear portion of the motorcycle, and the control unit outputs at least a control signal to the rear actuation device upon determination that a value of the sensing signal generated from the third sensor exceeds a threshold, so as to change at least one of the damping value and the preload value of the rear suspension device, until the value of the sensing signal generated from the third sensor is less than or equal to the threshold.

In an embodiment, the sensors include a third sensor and a fourth sensor which are disposed in an upper location of the rear portion and in a lower location of the rear portion of the motorcycle, respectively, and the control unit outputs at least a control signal to the rear actuation device upon determination that a ratio of values of the sensing signals generated from the third sensor and the fourth sensor exceeds a ratio threshold, so as to change at least one of the damping value and the preload value of the rear suspension device, until the ratio of values of the sensing signals generated from the third sensor and the fourth sensor is less than or equal to the ratio threshold.

In an embodiment, the control unit receives a throttle control signal; and, after determining that the motorcycle is in an abrupt acceleration state according to the throttle control signal and the sensing signals, the control unit outputs at least a control signal to the actuation unit, so as to increase at least one of the damping value and the preload value of the rear suspension device.

In an embodiment, the control unit receives a brake signal; and, after determining that the motorcycle is in an abrupt deceleration state according to the brake signal and the sensing signals, the control unit outputs at least a control signal to the actuation unit, so as to increase at least one of the damping value and the preload value of the front suspension device.

In an embodiment, the control unit receives a vehicular body horizontal adjustment signal; and, if the vehicular body horizontal adjustment signal indicates a need to increase the motorcycle's height, the control unit outputs at least a control signal to the actuation unit, so as to increase the preload value of at least one of the front suspension device and the rear suspension device.

In an embodiment, the control unit receives a vehicular body horizontal adjustment signal; and, if the vehicular body horizontal adjustment signal indicates a need to decrease the motorcycle's height, the control unit outputs at least a control signal to the actuation unit, so as to decrease the preload value of at least one of the front suspension device and the rear suspension device.

Therefore, the present disclosure provides an electronic variable suspension system capable of adjusting parameters thereof to meet driving needs and thereby enhances motorcycle performance, so as to ensure driver safety and enhance comfort-enriched driving experience.

### BRIEF DESCRIPTION OF THE DRAWINGS

Objectives, features, and advantages of the present disclosure are hereunder illustrated with specific embodiments in conjunction with the accompanying drawings, in which:
FIG. 1 is a block diagram of an electronic variable suspension system according to an embodiment of the present disclosure;
FIG. 2 is a schematic view illustrating a manner in which some components of the electronic variable suspension system are disposed on a motorcycle, according to an embodiment of the present disclosure; and
FIG. 3 is a schematic view illustrating a manner in which some components of the electronic variable suspension system are disposed on a motorcycle, according to another embodiment of the present disclosure.

### DETAILED DESCRIPTION OF THE PREFERRED EMBODIMENTS

The present disclosure provides in an embodiment thereof an electronic variable suspension system. The electronic variable suspension system is applicable to any types of motorcycles, such as mini motorcycles, scooters, general-purpose motorcycles, and tricycles, whether fuel-powered or electrically-driven. For instance, the motorcycle is configured to adjust suspension in an automatic mode, manual mode or both, but the present disclosure is not limited thereto.

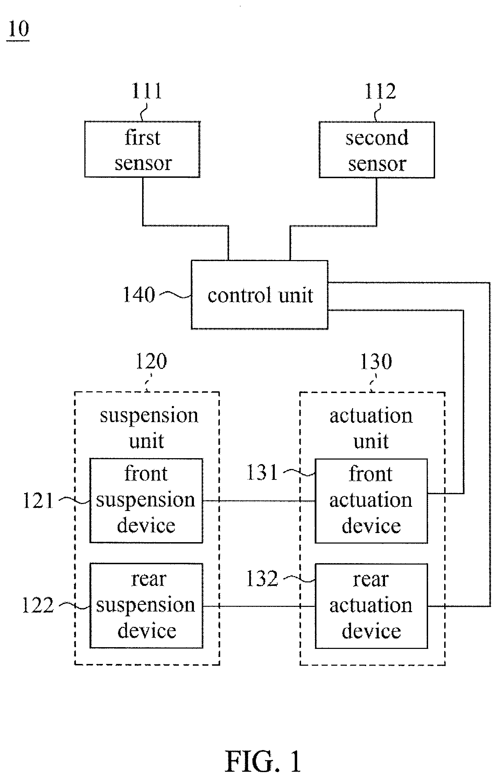

FIG. 1 is a block diagram of an electronic variable suspension system 10 according to an embodiment of the present disclosure. As shown in FIG. 1, the electronic variable suspension system 10 comprises a plurality of sensors, a suspension unit 120, an actuation unit 130, and a control unit 140. The sensors are coupled to the control unit 140 and disposed in the front portion and/or rear portion of the motorcycle to generate a plurality of sensing signals. For instance, the sensors include a first sensor 111 and a second sensor 112. The first sensor 111 and the second sensor 112 are disposed in an upper location of the front portion of the motorcycle and in a lower location of the front portion of the motorcycle, respectively, to sense acceleration, displacement and/or frequency of the motorcycle or that of the corresponding position(s) of the sensor(s) of the motorcycle. The suspension unit 120 comprises a front suspension device 121 and a rear suspension device 122 which are disposed in the motorcycle. The actuation unit 130 comprises a front actuation device 131 and a rear actuation device 132 which are coupled to the front suspension device 121 and the rear suspension device 122, respectively. The control unit 140 is electrically coupled to the sensors and the actuation unit 130 to generate at least a control signal according to the sensing signals. The actuation unit 130 changes a damping value and/or a preload value of the front suspension device 121 and/or the rear suspension device 122 according to the at least a control signal.

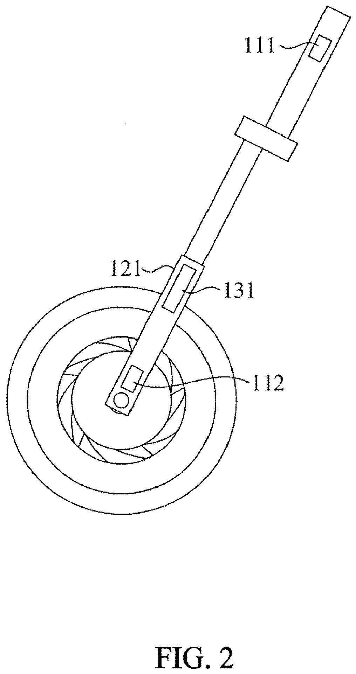

FIG. 2 is a schematic view illustrating a manner in which some components of the electronic variable suspension system are disposed on a motorcycle, according to an embodiment of the present disclosure. As shown in FIG. 2, the first sensor 111 is disposed in an upper location of the front portion of the motorcycle, the second sensor 112 is disposed in a lower location of the front portion of the motorcycle, whereas the front suspension device 121 and front actuation device 131 are disposed between the first sensor 111 and the second sensor 112.

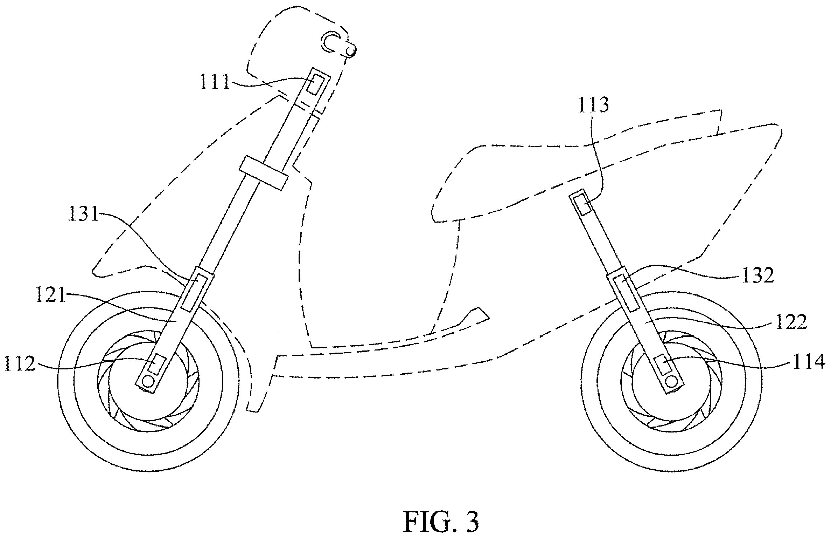

In another embodiment, the sensors further include a third sensor 113 and a fourth sensor 114. As shown in FIG. 3, the third sensor 113 is disposed in an upper location of the rear portion of the motorcycle, the fourth sensor 114 is disposed in a lower location of the rear portion of the motorcycle, whereas the rear suspension device 122 and the rear actuation device 132 are disposed between the third sensor 113 and the fourth sensor 114.

However, the present disclosure is not limited to the embodiment illustrated by FIGS. 2 and 3. For example, the sensors may be disposed in any other locations at the front portion or rear portion of the motorcycle, or at least two or more sensors may be disposed in the front portion or rear portion of the motorcycle, so as to generate related sensing signals.

For instance, at least one of the sensors is an acceleration sensor, a displacement sensor, or a frequency sensor, but the present disclosure is not limited thereto. In a variant embodiment, at least one of the sensors is a speed sensor, such as a magneto-electric speed sensor, a Hall speed sensor, a photoelectrical speed sensor or the other sensor. To implement the present disclosure, appropriate types or quantity of sensors are selected in order to meet the need to control or apply the actuation unit 130. For instance, in some embodiments, at least two sensors are disposed above and below the front suspension device 121, and at least two sensors are disposed above and below the rear suspension device 122, wherein the sensors are bi-axis, tri-axis or multi-axis acceleration sensors. The sensors detect horizontal acceleration, determine the motorcycle's acceleration and deceleration, and detect the motorcycle's speed and displacement. The sensors also detect vertical acceleration, determine the vertical acceleration (i.e., a value of vibration) of the front or rear suspension device, to determine the state of the road which the motorcycle is moving on and determine whether the motorcycle's driver is comfortable in driving the motorcycle.

Regarding the suspension unit 120, the front suspension device 121 or the rear suspension device 122 can be a semi-active or active suspension device, including a damper and a spring. In addition, the front suspension device 121 or the rear suspension device 122 can be implemented by using suspension of the same or different types. In some embodiments, the front suspension device 121 can be an active suspension device, whereas the rear suspension device 122 is equipped with a torque arm suspension, multiple-link suspension, parallel-link suspension, or QT suspension.

The control unit 140 can be implemented by using a processor, a digital signal processor, or a programmable integrated circuit, such as a microcontroller, a field programmable gate array (FPGA) or application specific integrated circuit (ASIC), or the control unit 140 can be realized as a dedicated circuit or module; however, the present disclosure is not limited thereto.

In the aforesaid embodiments, the electronic variable suspension system 10 is capable of adjusting parameters of the front or rear suspension device to meet driving needs so as to enhance motorcycle performance, ensure driver safety, and enrich driving experience of the driver. The following will provide various embodiments regarding this to illustrate applications thereof

In an embodiment, the control unit 140 generates at least a first control signal and sends the at least a first control signal to the rear actuation device 132. After the rear actuation device 132 changes the damping value and the preload value of the rear suspension device 122 according to the at least a first control signal, the control unit 140 generates at least a second control signal according to the sensing signals generated from the sensors and sends the at least a second control signal to the front actuation device 131, so as to change the damping value and/or the preload value of the front suspension device 121.

In some embodiments, the control unit 140 receives a throttle control signal or a brake signal. With the throttle control signal indicative of abrupt acceleration or the brake signal indicative of abrupt deceleration, the control unit 140 generates at least a control signal and sends the at least a control signal to the actuation unit 130 in order to increase the damping value and/or the preload value of the front suspension device 121 and/or the rear suspension device 122. For instance, at least two sensors are disposed above and below the front suspension device 121, and at least two sensors are disposed above and below the rear suspension device 122. When the control unit 140 determines that the motorcycle is in an abrupt acceleration state according to the sensing signals from the sensors regarding horizontal acceleration and the throttle control signal, the control unit 140 generates at least a control signal for controlling the rear actuation device 132 and thus adjusting the damping value and/or the preload value of the rear suspension device 122 such that the support capability of the rear suspension device 122 increases, thereby stabilizing the motorcycle's posture. When the control unit 140 determines that the motorcycle is in an abrupt deceleration state according to the sensing signals from the sensors regarding horizontal acceleration and the brake signal, the control unit 140 generates at least a control signal for controlling the front actuation device 131 and thus adjusting the damping value and/or the preload value of the front suspension device 121 such that the support capability of the front suspension device 121 increases, thereby stabilizing the motorcycle's posture. For instance, a criterion for determining an abrupt acceleration state is that the abrupt acceleration state occurs if the throttle openness corresponding to the throttle control signal is greater than a throttle openness threshold (such as 90%) and the horizontal acceleration detected by the sensors is greater than an abrupt acceleration threshold (such as 0.3g), wherein g denotes gravity acceleration. For instance, a criterion for determining an abrupt deceleration state is that the abrupt deceleration state occurs if the brake signal is activated and the horizontal acceleration detected based on the sensors is greater than an abrupt deceleration threshold (such as 0.6g). However, the present disclosure is not limited thereto.

In an embodiment, the control unit 140 receives a vehicular body horizontal adjustment signal. If the vehicular body horizontal adjustment signal indicates the need to increase the height of the motorcycle, the control unit 140 generates at least a control signal and sends the at least a control signal to the actuation unit 130, so as to increase the preload value of the front suspension device 121 and/or the rear suspension device 122.

In an embodiment, the control unit 140 receives a vehicular body horizontal adjustment signal. If the vehicular body horizontal adjustment signal indicates the need to decrease the height of the motorcycle, the control unit 140 generates at least a control signal and sends the at least a control signal to the actuation unit 130, so as to decrease the preload value of the front suspension device 121 and/or the rear suspension device 122.

In an embodiment, after receiving a mode selection signal, the control unit 140 generates at least a control signal according to the received mode selection signal and then sends the at least a control signal to the actuation unit 130, so as to change the damping value and/or the preload value of the front suspension device 121 and/or the rear suspension device 122.

In some embodiments, the mode selection signal is a signal indicating a selection of any one of the modes as follows: a sports mode, a comfort mode, a smart mode, an on-road mode and an off-road mode. For instance, depending on the mode indicated by the mode selection signal, at least a control signal is generated according to a criterion (such as a function of a threshold or a ratio threshold) related to the value of the sensing signal generated by a corresponding sensor, so as to change the damping value and/or the preload value of the front suspension device 121 and/or the rear suspension device 122. The damping value or the preload value will be changed, provided that the criterion is satisfied.

In some embodiments, as for the sensors disposed in an upper location of the front suspension device 121 or the rear suspension device 122 (or both), a corresponding threshold can be set. After determining that a value (such as vertical acceleration (or a value of vibration) of the suspension devices) of the sensing signal from the sensor at an upper location exceeds the threshold, the control unit 140 generates at least a control signal and sends the at least a control signal correspondingly to the front actuation device 131 or the rear actuation device 132 (or both) and thereby changes the damping value and/or the preload value of the front suspension device 121 or the rear suspension device 122 (or both). The control unit 140 can be configured to perform the aforesaid determination process repeatedly and thus generates the control signal for changing the damping value and/or the preload value until the value(s) of the sensing signal(s) generated from the sensor(s) at the upper location(s) is less than or equal to the corresponding threshold. This embodiment can be applied to any aforesaid embodiment. For instance, as for the comfort mode, the threshold for the sensor (such as acceleration sensor) in an upper location of the front suspension device 121 or the rear suspension device 122 (or both) can be set to 3g, wherein g denotes gravity acceleration. If the control unit 140 determines that the values of the sensing signals generated from the sensors in the upper locations exceed the threshold, it will change the damping value and/or the preload value of the front suspension device 121 or the rear suspension device 122 (or both), until the values of the sensing signals are less than or equal to the corresponding threshold. For instance, as for the sports mode, the corresponding threshold for a sensor (such as the acceleration sensor) in an upper location can be set to 4g. For instance, as for the off-road mode, the corresponding threshold for a sensor (such as the acceleration sensor) in an upper location can be set to 2g. Likewise, the present embodiments can be applied to any other aforesaid modes or any other embodiments.

In some other embodiments, as for sensors disposed above and below the front suspension device 121 and/or the rear suspension device 122 (or both), a ratio threshold for the values of the corresponding sensing signals (such as vertical acceleration (or a value of vibration) of the suspension devices) can be set. After determining that a ratio (G2/G1) of a value G2 of the sensing signal generated from a sensor at a lower location to a value G1 of the sensing signal generated from a sensor at an upper location exceeds the corresponding ratio threshold, the control unit 140 generates at least a control signal and sends the at least a control signal to the front actuation device 131 and/or the rear actuation device 132, thereby changing the damping value and/or the preload value of the front suspension device 121 and/or the rear suspension device 122. The control unit 140 can be configured to repeatedly perform the aforesaid determination process and generate a control signal to change the damping value and/or the preload value until the ratio (G2/G1) is less than or equal to the corresponding ratio threshold. This embodiment can be applied to any aforesaid embodiment. For instance, as for the comfort mode, the corresponding ratio threshold can be set to 4 for the sensors (such as the acceleration sensor) disposed above and below the front suspension device 121 and/or the rear suspension device 122. If the control unit 140 determines that the ratio (G2/G1) of the values of the sensing signals generated from the sensors exceeds the ratio threshold, the damping value and/or the preload value of the front suspension device 121 and/or the rear suspension device 122 will be changed. The aforesaid determination process will occur repeatedly, until the ratio (G2/G1) is less than or equal to the ratio threshold. For instance, the ratio threshold in the sports mode can be set to 3 and the ratio threshold in the off-road mode can be set to 5. The present embodiments can be also applied to other aforesaid modes or any other embodiments. However, the present disclosure is not limited thereto. For example, any criterion for generating the control signal by the control unit according to the sensing signals may be replaced with any other functions, such as a difference value of the values of the sensing signals generated from at least a sensor in an upper location and a sensor in a lower location, a statistical value thereof, or any result of computation of a function conducive to enhancement of the motorcycle's overall performance or enriching of the motorcyclist's comfort driving experience, so as to generate at least one appropriate control signal for changing the damping value and/or the preload value of the front portion and/or rear suspension devices.

In the aforesaid embodiments, the control unit 140 can be further implemented to detect whether a post-change signal value of the corresponding sensor satisfies the corresponding criterion after the control unit 140 has generated the control signal for changing the damping value and/or the preload value of the front portion and/or rear suspension devices. The control signal is generated again, if the criterion is found to remain unsatisfied, to change the damping value and/or the preload value of the front portion and/or rear suspension device, until the criterion is satisfied.

Therefore, in the aforesaid embodiments of the electronic variable suspension system, settings of the suspension devices can be changed to suit the condition of a road which a motorcycle is moving on or the motorcycle' condition of operation, so as to enhance the motorcycle's overall performance, ensure driver safety, and enrich the driver's comfort driving experience.

The present disclosure is disclosed above by preferred embodiments. However, persons skilled in the art should understand that the preferred embodiments are illustrative of the present disclosure only, but shall not be interpreted as restrictive of the scope of the present disclosure. Hence, all equivalent modifications and replacements made to the aforesaid embodiments shall fall within the scope of the present disclosure. Accordingly, the legal protection for the present disclosure shall be defined by the appended claims.

## Claims

1. An electronic variable suspension system (10), applicable to a motorcycle, the electronic variable suspension system comprising:
a plurality of sensors (111, 112, 113, or 114) disposed in at least one of a front portion and a rear portion of the motorcycle to sense one of acceleration, displacement, and frequency so as to generate a plurality of sensing signals;
a suspension unit (120) comprising a front suspension device (121) and a rear suspension device (122), disposed in the motorcycle;
an actuation unit (130) comprising a front actuation device (131) and a rear actuation device (132), coupled to the front suspension device (121) and the rear suspension device (122), respectively; and
a control unit (140) electrically coupled to the sensors (111, 112, 113, or 114) and the actuation unit (130) to generate at least a control signal according to the sensing signals,
wherein the actuation unit (130) changes at least one of a damping value and a preload value of at least one of the front suspension device (121) and the rear suspension device (122) according to the at least a control signal.

2. The electronic variable suspension system (10) of claim 1, wherein:
the control unit (140) outputs at least a first control signal to the rear actuation device (132); and
after the rear actuation device (132) changes the damping value and the preload value of the rear suspension device (122) according to the at least a first control signal, the control unit (140) generates at least a second control signal according to the sensing signals so as to change at least one of the damping value and the preload value of the front suspension device (121).

3. The electronic variable suspension system (10) of claim 1, wherein the sensors include a first sensor (111) disposed in an upper location of the front portion of the motorcycle, and the control unit (140) outputs at least a control signal to the front actuation device (131) upon determination that a value of the sensing signal generated from the first sensor (111) exceeds a threshold, so as to change at least one of the damping value and the preload value of the front suspension device (121), until the value of the sensing signal generated from the first sensor (111) is less than or equal to the threshold.

4. The electronic variable suspension system (10) of claim 1, wherein the sensors include a first sensor (111) and a second sensor (112) which are disposed in an upper location of the front portion and in a lower location of the front portion of the motorcycle, respectively, and the control unit (140) outputs at least a control signal to the front actuation device (131) upon determination that a ratio of values of the sensing signals generated from the first sensor (111) and the second sensor (112) exceeds a ratio threshold, so as to change at least one of the damping value and the preload value of the front suspension device (121), until the ratio of values of the sensing signals generated from the first sensor (111) and the second sensor (112) is less than or equal to the ratio threshold.

5. The electronic variable suspension system (10) of claim 1, wherein the sensors include a third sensor (113) disposed in an upper location of the rear portion of the motorcycle, and the control unit (140) outputs at least a control signal to the rear actuation device (132) upon determination that a value of the sensing signal generated from the third sensor (113) exceeds a threshold, so as to change at least one of the damping value and the preload value of the rear suspension device (122), until the value of the sensing signal generated from the third sensor (113) is less than or equal to the threshold.

6. The electronic variable suspension system (10) of claim 1, wherein the sensors include a third sensor (113) and a fourth sensor (114) which are disposed in an upper location of the rear portion and in a lower location of the rear portion of the motorcycle, respectively, and the control unit (140) outputs at least a control signal to the rear actuation device (132) upon determination that a ratio of values of the sensing signals generated from the third sensor (113) and the fourth sensor (114) exceeds a ratio threshold, so as to change at least one of the damping value and the preload value of the rear suspension device (122), until the ratio of values of the sensing signals generated from the third sensor (113) and the fourth sensor (114) is less than or equal to the ratio threshold.

7. The electronic variable suspension system (10) of claim 1, wherein:
the control unit (140) receives a throttle control signal; and
after determining that the motorcycle is in an abrupt acceleration state according to the throttle control signal and the sensing signals, the control unit (140) outputs at least a control signal to the actuation unit (130), so as to increase at least one of the damping value and the preload value of the rear suspension device (122).

8. The electronic variable suspension system (10) of claim 1, wherein:
the control unit (140) receives a brake signal; and
after determining that the motorcycle is in an abrupt deceleration state according to the brake signal and the sensing signals, the control unit (140) outputs at least a control signal to the actuation unit (130), so as to increase at least one of the damping value and the preload value of the front suspension device (121).

9. The electronic variable suspension system (10) of claim 1, wherein:
the control unit (140) receives a vehicular body horizontal adjustment signal; and
if the vehicular body horizontal adjustment signal indicates a need to increase the motorcycle's height, the control unit (140) outputs at least a control signal to the actuation unit (130), so as to increase the preload value of at least one of the front suspension device (121) and the rear suspension device (122).

10. The electronic variable suspension system (10) of claim 1, wherein:
the control unit (140) receives a vehicular body horizontal adjustment signal; and
if the vehicular body horizontal adjustment signal indicates a need to decrease the motorcycle's height, the control unit (140) outputs at least a control signal to the actuation unit (130), so as to decrease the preload value of at least one of the front suspension device (121) and the rear suspension device (122).
